# EUROPEAN PATENT APPLICATION

(11) **EP 4 473 876 A1**
(43) Date of publication of application: **11.12.2024**
(21) Application number: 23177676.6
(22) Date of filing: 06.06.2023
(51) Int. Cl.: A47J 37/06

(54) **COOKING APPARATUS WITH AUXILIARY FOOD SUPPORT**

(71) Applicant: Versuni Holding B.V., 5656 AE Eindhoven (NL)
(72) Inventor: SLADECEK, Marcel, 5656 AE Eindhoven (NL)
(74) Representative: Vollering, Stefanus Franciscus Maria

(57) **Abstract**

Provided is a cooking apparatus (100) comprising a cooking chamber (102) delimited by a cooking chamber wall (104). The cooking apparatus also includes a heating device (106) for heating the cooking chamber. An opening (112) is defined in the cooking chamber wall, through which opening heated air is releasable from the cooking chamber. The cooking apparatus further comprises an auxiliary food support (118). At least part of the auxiliary food support is above a bottom of the opening when the cooking apparatus is orientated for use. At least one flow path (116) for the heated air is defined between the opening and the cooking apparatus's surroundings via the at least part of the auxiliary food support. The auxiliary food support and the at least one flow path are arranged to permit heat transfer from the heated air to the auxiliary food support and/or to item(s) supported by the auxiliary food support.

## Description

### FIELD OF THE INVENTION

The invention relates to a cooking apparatus, for example a cooking apparatus comprising a table-top cooking appliance, whose cooking chamber has an opening for venting heated air to the cooking apparatus's surroundings.

### BACKGROUND OF THE INVENTION

Various different types of cooking apparatus are known, such as table-top cooking appliances that are positionable by the consumer on a table-top or kitchen work-top.

One such type of table-top cooking appliance is the air fryer. Air fryers are already common kitchen appliances but their popularity continues to grow. This may be at least partly due to air fryers tending to consume less energy relative to built-in cooking appliances.

Air fryers may use radiation and convection heat to cook food. One of the most successful applications of the air fryer is cooking crispy food, and especially fries.

In order to cook fries from frozen, the water in the fries has to be melted in a first phase transition, and then a significant fraction of the water is evaporated in order to attain crispy cooked fries.

Every gram of liquid water corresponds to approximately one liter of steam. This means that cooking 1000 g of frozen fries, and evaporating 500 g of water, entails generating around 500 liters of steam. This steam is permitted to leave the air fryer to avoid an overpressure being generated inside the air fryer.

The escape of hot steam from the air fryer can represent unused energy leaving the system, with concomitant detriment to efficiency of operation of the air fryer. This can represent poor value for money for the consumer in terms of energy costs for operating the air fryer.

It is noted that the energy consumed by operation of the circulation system, e.g. fan, employed to circulate air in the air fryer may be negligible in respect of energy efficiency considerations, since the air fryer's heating device may consume most of the energy supplied to the air fryer.

In summary, challenges remain in terms of providing cooking apparatuses, e.g. table-top cooking appliances, such as air fryers, that make better use of the energy supplied to them for cooking food.

### SUMMARY OF THE INVENTION

The invention is defined by the claims.

According to examples in accordance with an aspect of the invention, there is provided a cooking apparatus comprising: a cooking chamber delimited by a cooking chamber wall; a heating device for heating the cooking chamber; an opening defined in the cooking chamber wall, through which opening heated air is releasable from the cooking chamber; and an auxiliary food support, at least part of the auxiliary food support being above a bottom of the opening when the cooking apparatus is orientated for use, wherein at least one flow path for the heated air is defined between the opening and the cooking apparatus's surroundings via said at least part of the auxiliary food support, the auxiliary food support and the at least one flow path being arranged to permit heat transfer from the heated air to the auxiliary food support and/or to item(s) supported by the auxiliary food support.

The opening in the cooking chamber wall and the flow path(s) extending from the opening to the cooking apparatus's surroundings, e.g. the atmosphere of the kitchen in which the cooking apparatus is being used, assists to avoid an overpressure being generated in the cooking chamber. The present invention is partly based on the realization that heat of the heated air released via the opening and the flow path(s) can be used to heat an auxiliary food support, so that the heat of this heated air is put to use rather than being wasted via dissipation to the surroundings.

To this end, the flow path(s) is or are defined between the opening and the surroundings via at least part of the auxiliary food support that is above, in other words elevated relative to, the bottom of the opening when the cooking apparatus is orientated for use. In this way, transfer of heat to the auxiliary food support and/or to item(s) supported by the auxiliary food support may be via, at least in part, natural convection, with concomitant efficiency benefits.

It is noted that the term "bottom of the opening" is intended to mean a lowest point of a periphery that delimits the opening, e.g. a lower edge of the opening.

In some embodiments, the at least part of the auxiliary food support is above, in other words elevated relative to, a top of the opening when the cooking apparatus is orientated for use.

The term "top of the opening" is intended to mean a highest point of the periphery that delimits the opening, e.g. an upper edge of the opening.

It is emphasized that the flow path(s) enable the heated air to escape to the cooking apparatus's surroundings. This means that there may be continuous flow of heated air along the flow path(s), and thus continuous heat delivery to the auxiliary food support and/or to item(s) supported by the auxiliary food support. Thus, the auxiliary food support can be used for cooking food supported thereon, as opposed to being used merely for heating or defrosting food, or warming plates.

In some embodiments, the cooking apparatus comprises a circulation system arranged to direct air to the heating device and to circulate the air heated by the heating device.

The cooking chamber and the circulation system may be arranged such that, when the air fryer is orientated for use, at least part of the heated air traverses a height of the cooking chamber.

The traversing of the height of the cooking chamber may mean that the at least part of the heated air passes upwardly and/or downwardly through the cooking chamber.

In other words, this traversing of the height of the cooking chamber may mean upward and/or downward heated airflow through the food received in the cooking chamber.

This may assist the cooking apparatus, e.g. comprising an air fryer, to provide relatively energy-efficient cooking and/or a frying-type cooking effect.

The opening may be aligned with a flow outlet area of the circulation system such that air displaced by the circulation is directed through the opening. In such embodiments, the circulation system may assist flow of the heated air in the flow path(s) to the cooking apparatus's surroundings via the at least part of the auxiliary food support.

In some embodiments, the at least one flow path is configured to provide decreased resistance to flow of the heated air away from the opening than at the opening.

In other words, the flow resistance may be lower downstream of the opening.

This may facilitate flow of the heated air along the flow path(s) and thus assist with heat transfer to the auxiliary food support and/or to item(s) supported by the auxiliary food support.

The at least one flow path can generally be regarded as configured to reduce the pressure drop and maximize the airflow.

In embodiments in which the cooking apparatus includes the circulation system, the decreased flow resistance downstream of the opening may mean that less burden is placed on the circulation system in terms of forcing heated air along the flow path(s). Thus, for example, a cheaper motor may be employed in such a circulation system.

As an alternative or in addition to the flow path(s) providing decreased resistance to flow of the heated air away from the opening than at the opening, the cooking apparatus may include an air displacement device, e.g. in addition to the circulation system, configured to displace air along the flow path(s).

Such an air displacement device, e.g. fan, may assist to support flow of heated air along the flow path(s), for example should the flow resistance in the flow path(s) be relatively high.

In some embodiments, the at least one flow path's cross-sectional area is greater away from the opening than at the opening. This may provide a relatively straightforwardly implementable way of reducing flow resistance in the flow path(s) downstream of the opening.

Alternatively or additionally, the flow resistance may be reduced downstream of the opening by controlling the shape of the flow path(s), for instance by making the flow path(s) less tortuous downstream of the opening.

In some embodiments, the at least one flow path is arranged to pass through a food supporting region of the auxiliary food support. In such embodiments, the heat of the heated air may be directly transferred to item(s), e.g. food, supported in the food supporting region due to such item(s) being contacted by the heated air passing through the food supporting region.

In other embodiments, the cooking apparatus comprises a heat conduction element arranged between the at least one flow path and the food supporting region of the auxiliary food support such that heat is transferrable from the heated air to the food supporting region via the heat conduction element.

The heat conduction element may assist to transfer heat from the heated air to the food supporting region but nonetheless provide a barrier between the food supporting region and the, e.g. each of the, flow path(s).

This may assist with cooking or warming of item(s), e.g. food, supported by the auxiliary food support with less or without contamination of this food by the heated gas from the cooking chamber.

In some embodiments, the heat conduction element comprises a metallic wall arranged between the at least one flow path and the food supporting region. Such a metallic wall may be included in, e.g. may define, the auxiliary food support.

Alternatively or additionally, the cooking apparatus may comprise a reservoir for containing liquid, with the reservoir being arranged to permit heat transfer from the heated air to the food supporting region via liquid contained in the reservoir.

The liquid may assist to control heat transfer to the food supporting region, for instance in the manner of a bain-marie.

In some embodiments, the flow path(s) is or are arranged to pass through the reservoir.

In such embodiments, the liquid in the reservoir may provide a filtering function, due to particulates in the heated air being retained by the liquid.

A vent through which the heated air in the at least one flow path is releasable to the cooking apparatus's surroundings may be arranged above the at least part of the auxiliary food support when the cooking apparatus is orientated for use. This vent positioning may mean that natural convection assists escape of heated air from the flow path(s) to the surroundings.

In some embodiments, the auxiliary food support delimits, at least partly, an auxiliary chamber in which food is receivable. In other embodiments, the auxiliary food support is in the form of a plate, e.g. without sides and without a lid.

A lower portion of the above-mentioned auxiliary chamber may delimit one or more inlets for admitting the heated air into the auxiliary chamber, with an upper portion of the auxiliary chamber delimiting one or more apertures for releasing the heated air in the at least one flow path to the cooking apparatus's surroundings.

In such embodiments, the flow path(s) may extend through the auxiliary chamber, with the aperture(s) in the upper portion being included in, e.g. defining, the vent through which the heated air is releasable to the cooking apparatus's surroundings.

In some embodiments, the cooking apparatus comprises a cooling channel in which air from the cooking apparatus's surroundings is received to provide cooling to part(s) of the cooking apparatus external to the cooking chamber.

For example, the cooling channel may assist to cool sensitive components, e.g. electronic components, included in the cooking apparatus but arranged outside the cooking chamber.

In some embodiments, the cooking apparatus comprises a control system configured to control delivery of air from the cooling channel and/or air received from the, e.g. directly from the, surroundings into the flow path(s). The control system may assist to control the temperature of the heated air in the flow path(s), in particular when item(s), e.g. food, supported by the auxiliary food support is/are intended to be heated more moderately than would be the case when no air from the cooling channel or from the surroundings is delivered into the flow path(s).

Air being received directly from the surroundings may mean that the control system receives air from the surroundings via an ambient air inlet and controls delivery of this air into the flow path(s).

In such embodiments, the air received by the control system directly from the surroundings via the ambient air inlet may not have passed along the cooling channel, if any such cooling channel is included in the cooking apparatus, prior to reaching the control system.

In some embodiments, the auxiliary food support is detachable from the cooking apparatus. Detachment of the auxiliary food support from the cooking apparatus, in other words from a remainder of the cooking apparatus that comprises the cooking chamber and the heating device, may facilitate cleaning of the cooking apparatus, reconfiguring of the cooking apparatus for preparing different types of food, and/or stowing of the cooking apparatus in a storage area.

In other embodiments, the auxiliary food support is integrated into, e.g. is non-detachable from, the cooking apparatus.

Such integration of the auxiliary food support may render the cooking apparatus more straightforward to manufacture.

In some embodiments, the cooking apparatus, e.g. in the form of a kit of parts, comprises a plurality of auxiliary food supports that are substitutable for each other. Thus, the respective auxiliary food support that has substituted another auxiliary food support of the plurality of auxiliary food supports can be heated by the heated air in the at least one flow path.

One of the plurality of auxiliary food supports can, for instance, be employed for heating food and/or warming plates for serving while another of the plurality of auxiliary food supports that is detached from the cooking apparatus can be used for serving food that has already been heated, supporting warmed plates, or can be cleaned, etc.

When different auxiliary food supports are included in the cooking apparatus, the different auxiliary food supports can fulfil different food preparation purposes.

For example, one of the auxiliary food supports may have a lower portion that delimits one or more inlets for admitting the heated air, e.g. for cooking salmon, while another of the auxiliary food supports may comprise a plate or auxiliary chamber without holes in a lower portion thereof, e.g. on or in which chocolate can be melted.

More generally, the cooking apparatus may be a domestic cooking apparatus, for example a domestic cooking apparatus comprising a table-top cooking appliance.

Avoiding wasting heat may be particularly important in the case of table-top cooking appliances, given that their use in preference to built-in convection ovens may be at least partly due to their lower energy consumption. The present invention provides a way of making table-top cooking appliances yet more attractive from an energy use perspective.

In some embodiments, the table-top cooking appliance is in the form of an air fryer. In such embodiments, the energy wastage avoidance of the present invention may be advantageously combined with relatively energy-efficient cooking associated with air fryers.

According to another aspect there is provided a cooking apparatus comprising: a cooking chamber delimited by a cooking chamber wall; a heating device for heating the cooking chamber; an opening defined in the cooking chamber wall, through which opening heated air is releasable from the cooking chamber; at least one flow path defined between the opening and the cooking apparatus's surroundings; at least one ambient air inlet for receiving ambient air from the cooking apparatus's surroundings; and an air combining system configured to enable combining of air received via the at least one ambient air inlet with the heated air released from the cooking chamber so as to control a temperature of air in the at least one flow path.

Such control of the temperature of air in the at least one flow path, via the air combining system combining air received via the ambient air inlet(s) with heated air released from the cooking chamber's opening, may assist to minimize the risk of damage to items or injury to people in the vicinity of the cooking apparatus by heated air escaping from the cooking apparatus.

In some embodiments, the cooking apparatus comprises an auxiliary food support, with the at least one flow path being arranged to permit heat transfer from the air in the at least one flow path to the auxiliary food support and/or to item(s) supported by the auxiliary food support.

Thus, the control of the temperature of air in the flow path(s) can be used to control heating of such an auxiliary food support and/or item(s) supported thereby.

In some embodiments, the air combining system is configured to enable adjustment of delivery of air received via the at least one ambient air inlet into the at least one flow path and/or adjustment of delivery of the heated air released from the cooking chamber into the at least one flow path.

This may be achieved in any suitable manner, such as by the air combining system comprising a valve assembly configured to control fluid communication between the flow path(s) and the ambient air inlet(s) and/or to control fluid communication between the cooking chamber and the flow path(s).

In some embodiments, the at least one ambient air inlet comprises a cooling channel inlet, and the cooking apparatus comprises a cooling channel in which air from the cooking apparatus's surroundings is received, via the cooling channel inlet, to provide cooling to part(s) of the cooking apparatus external to the cooking chamber.

In such embodiments, the air combining system may be configured to enable combining of air from the cooling channel with the heated air released from the cooking chamber so as to control the temperature of the air in the at least one flow path.

As described above in relation to the first aspect, the cooking apparatus may be a domestic cooking apparatus, for example a domestic cooking apparatus comprising a table-top cooking appliance.

For such a table-top cooking appliance, e.g. an air fryer, minimizing the risk of damage to items in the vicinity of the kitchen work-top and taking steps to minimize the risk of injury to the user preparing food on the kitchen work-top may be particularly important. Hence the air combining system may be particularly beneficial in the context of table-top cooking appliances.

More generally, embodiments described above in respect of the first aspect may be applicable to the second aspect. For example, the cooking apparatus may comprise a circulation system arranged to direct air to the heating device and to circulate the air heated by the heating device.

Alternatively or additionally, the at least one flow path may be configured to provide decreased resistance to flow of the heated air away from the opening than at the opening, for example by the at least one flow path's cross-sectional area being greater away from the opening than at the opening and/or by controlling the shape of the flow path(s), for instance by making the flow path(s) less tortuous downstream of the opening.

Alternatively or additionally, the cooking apparatus may include an air displacement device, e.g. in addition to the circulation system, configured to displace air along the flow path(s).

Alternatively or additionally, the at least one flow path may be arranged to pass through a food supporting region of the auxiliary food support, or the cooking apparatus may comprise a heat conduction element arranged between the at least one flow path and the food supporting region of the auxiliary food support such that heat is transferrable from the heated air to the food supporting region via the heat conduction element.

These and other aspects of the invention will be apparent from and elucidated with reference to the embodiment(s) described hereinafter.

### BRIEF DESCRIPTION OF THE DRAWINGS

For a better understanding of the invention, and to show more clearly how it may be carried into effect, reference will now be made, by way of example only, to the accompanying drawings, in which:
FIG. 1 schematically depicts a cooking apparatus according to a first example;
FIG. 2 schematically depicts two configurations of a cooking apparatus according to a second example;
FIG. 3 schematically depicts two configurations of a cooking apparatus according to a third example;
FIG. 4 schematically depicts an auxiliary food support according to an example;
FIG. 5 schematically depicts two configurations of a cooking apparatus according to a fourth example; and
FIG. 6 schematically depicts a cooking apparatus according to a fifth example.

### DETAILED DESCRIPTION OF THE EMBODIMENTS

The invention will be described with reference to the Figures.

It should be understood that the detailed description and specific examples, while indicating exemplary embodiments of the apparatus, systems and methods, are intended for purposes of illustration only and are not intended to limit the scope of the invention. These and other features, aspects, and advantages of the apparatus, systems and methods of the present invention will become better understood from the following description, appended claims, and accompanying drawings. It should be understood that the Figures are merely schematic and are not drawn to scale. It should also be understood that the same reference numerals are used throughout the Figures to indicate the same or similar parts.

Provided is a cooking apparatus comprising a cooking chamber delimited by a cooking chamber wall. The cooking apparatus also includes a heating device for heating the cooking chamber. An opening is defined in the cooking chamber wall, through which opening heated air is releasable from the cooking chamber. The cooking apparatus further comprises an auxiliary food support. At least part of the auxiliary food support is above a bottom of the opening when the cooking apparatus is orientated for use. At least one flow path for the heated air is defined between the opening and the cooking apparatus's surroundings via the at least part of the auxiliary food support. The auxiliary food support and the at least one flow path are arranged to permit heat transfer from the heated air to the auxiliary food support and/or to item(s), e.g. food, supported by the auxiliary food support.

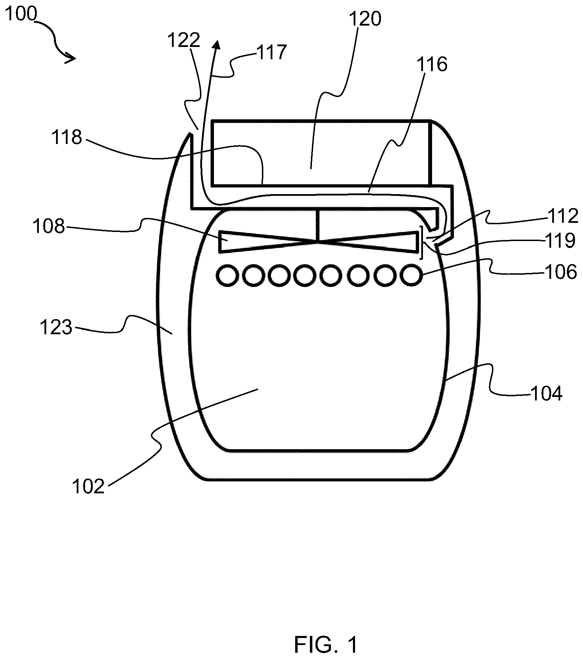

FIG. 1 schematically depicts a cooking apparatus 100 according to an example. The cooking apparatus 100 comprises a cooking chamber 102 in which food (not visible) is receivable. The cooking chamber 102 is at least partly delimited by a cooking chamber wall 104.

The cooking apparatus 100 also includes a heating device 106 for heating the cooking chamber 102. In at least some embodiments, such as shown in FIG. 1, the cooking apparatus 100 further comprises a circulation system 108 arranged to direct air to the heating device 106 and to circulate the air heated by the heating device 106.

The heating device 106 can have any suitable design. In some embodiments, the heating device 106 comprises a resistive heating element. Particular mention is made of a spiral resistive heating element.

Air can, for example, be circulated by the circulation system 108 through space(s) between coils of such a spiral resistive heating element in order to heat the air. Such coils are schematically depicted in FIG. 1.

The circulation system 108 can have any suitable design. In at least some embodiments, the circulation system 108 includes a fan and a motor, with rotation of the fan by the motor causing the circulating of air.

The cooking chamber 102 and the circulation system 108 may be arranged such that, when the cooking apparatus 100 is orientated for use, at least part of the heated air traverses a height of the cooking chamber 102.

The traversing of the height of the cooking chamber 102 may mean that the at least part of the heated air passes upwardly and/or downwardly through the cooking chamber 102. In other words, this traversing of the height of the cooking chamber 102 may mean upward and/or downward heated airflow through the food received in the cooking chamber 102.

This may assist the cooking apparatus 100, e.g. comprising an air fryer, to provide relatively energy-efficient cooking and/or a frying-type cooking effect.

More generally, an opening 112 is defined in the cooking chamber wall 104. Heated air is releasable from the cooking chamber 102 through the opening 112. At least one flow path 116 for the heated air is defined between the opening 112 and the cooking apparatus's 100 surroundings. The opening 112 and the flow path(s) 116 extending from the opening 112 to the cooking apparatus's 100 surroundings, e.g. the atmosphere of the kitchen in which the cooking apparatus 100 is being used, may assist to avoid an overpressure being generated in the cooking chamber 102. The direction of flow along the flow path(s) is denoted in FIG. 1 by the arrow 117.

It is noted that heat leaving cooking apparatuses 100, e.g. air fryers, via such flow path(s) 116 is optically detectable/visualizable.

The present invention is partly based on the realization that heat of the heated air released via the opening 112 and the flow path(s) 116 can be used to heat an auxiliary food support 118, so that the heat of this heated air is put to use rather than being wasted via dissipation to the surroundings.

To this end, the flow path(s) 116 is or are defined between the opening 112 and the cooking apparatus's 100 surroundings via at least part of the auxiliary food support 118, with the auxiliary food support 118 and the flow path(s) 116 being arranged to permit heat transfer from the heated air to the auxiliary food support 118 and/or to item(s), e.g. food, supported by the auxiliary food support 118.

Such avoidance of wasting heat may be particularly important in embodiments in which a table-top cooking appliance, such as an air fryer, is included in the cooking apparatus 100, particularly given that such table-top cooking appliances tend to be used in preference to built-in convection ovens at least partly owing to their lower energy consumption. The present invention may nonetheless be applicable to cooking apparatuses 100 more generally, such as domestic cooking apparatuses 100.

In at least some embodiments, the heating device 106 is the only heating device 106 included in the cooking apparatus 100, e.g. with no additional heating device, in addition to the heating device 106, being included in the cooking apparatus 100 for heating the auxiliary food support 118.

The energy efficiency-related benefits provided by the cooking apparatus 100 according to the present invention may assist to save the consumer money, in terms of energy costs, as well as increasing recipe possibilities, increasing functionality, providing time saving, e.g. by enabling a full dish to be prepared in one go, as well as, in certain embodiments, alleviating smoke and debris release into the surroundings of the cooking apparatus 100.

In particular, arrangement of the flow path(s) 116 to permit heat transfer from the heated air to the auxiliary food support 118 and/or to item(s), e.g. food, supported by the auxiliary food support 118 may add one or more of the following examples of useful additional functionality to the cooking apparatus 100: plate warming, food defrosting, food warming/keeping warm, food melting, e.g. chocolate or butter melting, and food re-heating, food cooking and/or steaming.

A prototype cooking apparatus 100 was found to be capable of cooking (by steaming) salmon on the auxiliary food support 118, as well as being capable of cooking a full dish comprising fries and salmon in one go. In the latter experiment, the fries were cooked in the cooking chamber 102 and the salmon was cooked on the auxiliary food support 118. The prototype cooking apparatus 100 was also found to be capable of defrosting summer berries and melting chocolate and butter when these foods were supported by the auxiliary food support 118.

More generally, and referring again to FIG. 1, the at least part of the auxiliary food support 118, that is passed and thereby receives heat from the heated air in the flow path(s) 116, is disposed above a bottom of the opening 112 when the cooking apparatus 100 is orientated for use.

In other words, the at least part of the auxiliary food support 118 is elevated relative to the opening 112 when the cooking apparatus 100 is orientated for use.

In this way, transfer of heat to the auxiliary food support 118 and/or to item(s) supported by the auxiliary food support 118 may be via, at least in part, natural convection, with concomitant efficiency benefits.

This natural convection may be supplemented by the circulation system 108 being arranged to displace the heated air through the opening 112 and along the flow path(s) 116. In some embodiments, such as shown in FIG. 1, the opening 112 may be aligned with a flow outlet area 119 of the circulation system 108 such that air displaced by the circulation system 108 is directed through the opening 112. In such embodiments, the circulation system 108 may assist flow of the heated air in the flow path(s) 116 to the cooking apparatus's 100 surroundings via the at least part of the auxiliary food support 118.

In some embodiments, the cooking apparatus 100 includes an air displacement device, for example in addition to the circulation system 108, configured to displace air along the flow path(s) 116. Such an air displacement device, e.g. fan, may assist to support flow of heated air along the flow path(s) 116, for example should the flow resistance in the flow path(s) 116 be relatively high.

Alternatively or additionally to the air displacement device and/or the air circulation system 108 assisting airflow along the flow path(s) 116, the, e.g. each of the, at least one flow path 116 may be configured to provide decreased resistance to flow of the heated air away from the opening 112 than at the opening 112.

In other words, the flow resistance may be lower downstream of the opening 112. This may facilitate flow of the heated air along the flow path(s) 116 and thus assist with heat transfer to the auxiliary food support 118 and/or to item(s) supported by the auxiliary food support 118.

In embodiments in which the cooking apparatus 100 includes the circulation system 108 and/or the air displacement device, the decreased flow resistance downstream of the opening 112 may mean that less burden is placed on the circulation system 108 and/or the air displacement device in terms of forcing heated air along the flow path(s) 116. Thus, for example, a cheaper motor may be employed in such a circulation system 108 and/or air displacement device.

Providing a decreased flow resistance to the flow of the heated air in the flow path(s) 116 away from the opening 112 than at the opening 112 can be implemented in any suitable manner. In some embodiments, the at least one flow path's 116 cross-sectional area is greater away from the opening 112 than at the opening 112. This may provide a relatively straightforwardly implementable way of reducing flow resistance in the flow path(s) 116 downstream of the opening 112.

Alternatively or additionally, the flow resistance may be reduced downstream of the opening 112 by controlling the shape of the flow path(s) 116, for instance by making the flow path(s) 116 less tortuous downstream of the opening 112.

The at least one flow path 116 can generally be regarded as configured to reduce the pressure drop and maximize the airflow downstream of the opening 112.

It is emphasized that the flow path(s) 116 enable the heated air to escape to the cooking apparatus's 100 surroundings. This means that there may be continuous flow of heated air along the flow path(s) 116, and thus continuous heat delivery to the auxiliary food support 118 and/or to item(s), e.g. food, supported by the auxiliary food support 118. Thus, the auxiliary food support 118 can be used for cooking food supported thereon, as opposed to being used merely for heating or defrosting food, or warming plates.

In general, the cooking apparatus 100 may comprise a vent 122 through which the heated air in the at least one flow path 116 is releasable to the cooking apparatus's 100 surroundings.

In some embodiments, such as shown in FIG. 1, the vent 122 is arranged above the at least part of the auxiliary food support 118, that is passed and thereby receives heat from the heated air in the flow path(s) 116, when the cooking apparatus 100 is orientated for use. This positioning of the vent 122 may mean that natural convection assists escape of heated air from the flow path(s) 116 to the surroundings.

Alternatively or additionally, the at least one flow path's 116 cross-sectional area may be greater at the vent 122 than at the opening 112.

This may assist flow along the flow path(s) 116 and thus heat transfer to the auxiliary food support 118 and/or to item(s), e.g. food, supported by the auxiliary food support 118.

In some embodiments, the flow path(s) 116 extend, at least partly, between an outer shell of the auxiliary food support 118 and a food supporting region 120, e.g. an inner container, of the auxiliary food support 118.

Heating of the auxiliary food support 118 via heated air in the flow path(s) 116 (and thus the item(s), e.g. food, supported by the auxiliary food support 118) may be controllable.

Such control may, for example, enable cooking and/or heating processes in the cooking chamber 102 and on the auxiliary food support 118 to be aligned with each other, e.g. synchronized.

This may assist preparation of a meal comprising food cooked and/or heated in the cooking chamber 102 and on the auxiliary food support 118 in one go.

In some embodiments, a temperature of the heating device 106 may be controllable to control heat transfer to item(s), e.g. food, supported by the auxiliary food support 118, as well as to control the temperature of the cooking chamber 102.

Alternatively or additionally, airflow along the flow path(s) 116, and thus heat transfer to the auxiliary food support 118 and/or to item(s) supported by the auxiliary food support 118, may be regulated by one or more of: control over a fan speed of and/or flow direction provided by the circulation system 108, a fan speed of the air displacement device, and adjustment of flow resistance in the flow path(s) 116, e.g. via control over louvers provided at the vent 122.

As an example of control over flow direction, the flow may be redirected, for example, away from the heating device 106 and/or food received in the cooking chamber 102, and directly towards the opening 112.

In some embodiments, the cooking apparatus 100 comprises a cooling channel 123 in which air from the cooking apparatus's 100 surroundings is received to provide cooling to part(s) of the cooking apparatus 100 external to the cooking chamber 102. For example, the cooling channel 123 may assist to cool sensitive components, e.g. electronic components, included in the cooking apparatus 100 but arranged outside the cooking chamber 102.

In some embodiments, the cooking apparatus 100 comprises a control system configured to control delivery of air from the cooling channel 123 and/or air received from, e.g. directly from, the surroundings into the flow path(s) 116. The control system may assist to control the temperature of the heated air in the flow path(s) 116, in particular when the food supported by the auxiliary food support 118 is intended to be heated more moderately than would be the case when no air from the cooling channel 123 or from the surroundings is delivered into the flow path(s) 116.

In other words, the temperature of the air flowing along the flow path(s) 116 and transferring heat to the auxiliary food support 118 can be regulated by partly mixing air outputted from the cooling channel 123 and/or air received from, e.g. directly from, the surroundings with the heated air released into flow path(s) 116 via the opening 112.

The resultant more moderate heating can be beneficial when it is desired, for instance, to use the auxiliary food support 118 to keep food, such as potatoes, rice, cous-cous, etc., warm.

Such air mixing may be an alternative or in addition to the other measures described above for controlling heating of the auxiliary food support 118.

In some embodiments, such as shown in FIG. 1, the auxiliary food support 118 at least partly delimits an auxiliary chamber in which food is receivable. In such embodiments, the auxiliary food support 118 may define a base of the auxiliary chamber. In other embodiments, the auxiliary food support 118 is in the form of a plate, e.g. without sides and without a lid.

Heat transfer from the heated air in the flow path(s) 116 to the auxiliary food support 118 and/or to item(s), e.g. food, supported by the auxiliary food support 118 can be implemented in any suitable manner. In some embodiments, the cooking apparatus 100 comprises a heat conduction element arranged between the, e.g. each of the, at least one flow path 116 and the food supporting region 120 of the auxiliary food support 118 such that heat is transferrable from the heated air to the food supporting region 120 via the heat conduction element. The heat conduction element may assist to transfer heat from the heated air to the food supporting region 120 but nonetheless provide a barrier between the food supporting region 120 and the, e.g. each of the, flow path(s) 116.

This may assist with cooking or warming of item(s), e.g. food, supported by the auxiliary food support 118 with less or without contamination of this food by the heated gas from the cooking chamber 102.

Whilst the heat conduction element may mean that the item(s) supported by the auxiliary food support 118 reach a lower temperature than, for example, embodiments in which the item(s) are directly contacted by the heated air from the cooking chamber 102, the temperature of the item(s) may be more stable. This may be beneficial for relatively temperature-sensitive applications.

In some embodiments, the heat conduction element comprises a metallic wall arranged between the, e.g. each of the, at least one flow path 116 and the food supporting region 120. Such a metallic wall may be included in, e.g. may define, the auxiliary food support 118.

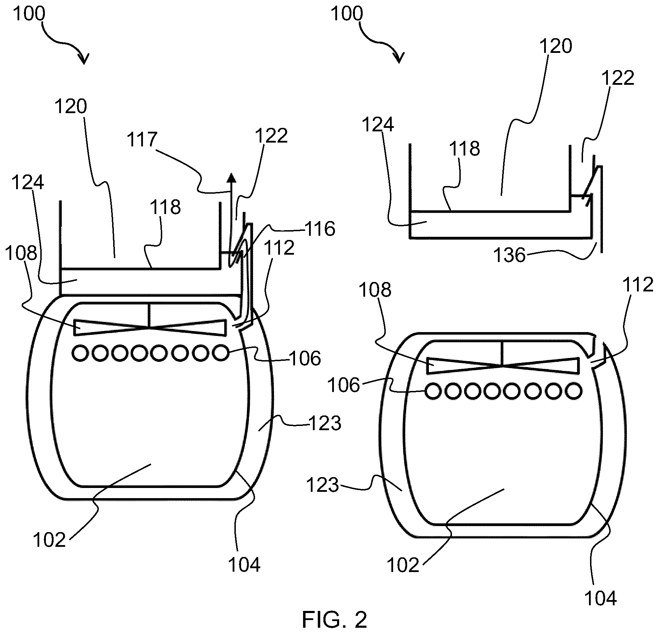

Alternatively or additionally, and referring to FIG. 2, the cooking apparatus 100 may comprise a reservoir 124 for containing liquid, with the reservoir 124 being arranged to permit heat transfer from the heated air to the food supporting region 120 via liquid contained in the reservoir 124. The liquid, e.g. water, may assist to control heat transfer to the food supporting region 120, for instance in the manner of a bain-marie.

In some embodiments, such as shown in FIG. 2, the flow path(s) 116 is or are arranged to pass through the reservoir 124. In such embodiments, the liquid in the reservoir 124 may provide a filtering function, due to particulates in the heated air being retained by the liquid. In this manner, smoke and debris release into the surroundings of the cooking apparatus 100 may be alleviated.

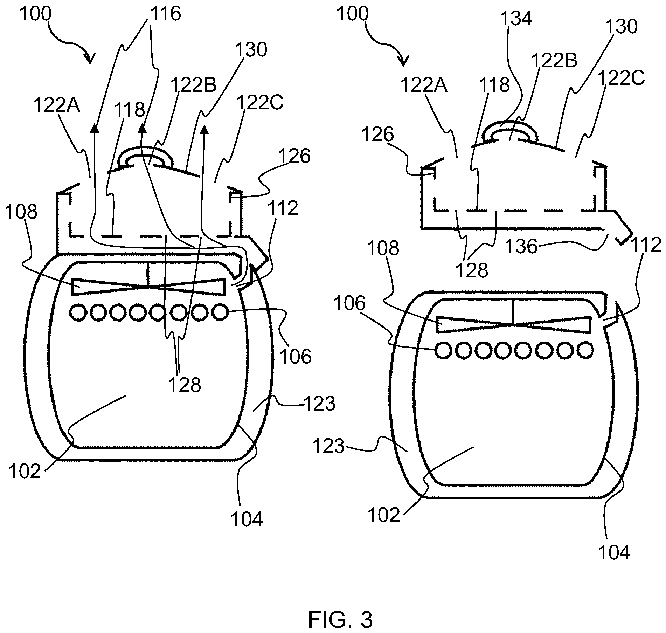

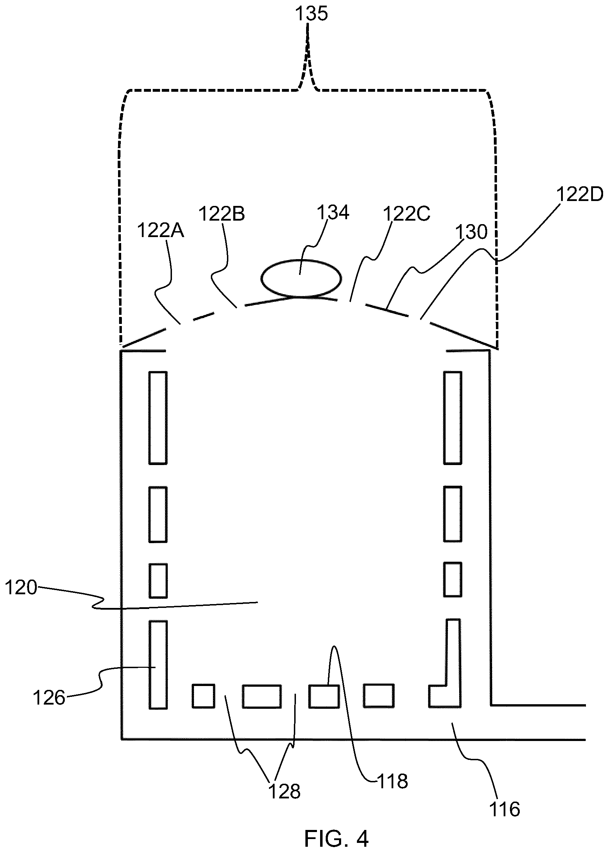

In other embodiments, such as shown in FIGs. 3 and 4, the flow path(s) 116 is or are arranged to pass through the food supporting region 120 of the auxiliary food support 118. In such embodiments, the heat of the heated air may be directly transferred to item(s), e.g. food, supported in the food supporting region 120 due to such item(s) being contacted by the heated air passing through the food supporting region 120. Such direct heat transfer may enable item(s), e.g. food, supported by the auxiliary food support 118 to reach relatively high temperatures, with a larger variety of cooking applications being correspondingly accessible.

In some embodiments, and still referring to FIGs. 3 and 4, a lower portion 126 of the above-mentioned auxiliary chamber may delimit one or more inlets 128 for admitting the heated air into the auxiliary chamber, with an upper portion 130 of the auxiliary chamber delimiting one or more apertures 122A, 122B, 122C, 122D for releasing the heated air in the at least one flow path 116 to the cooking apparatus's 100 surroundings.

In such embodiments, the, e.g. each of the, at least one flow path 116 may extend through the auxiliary chamber, with the aperture(s) 122A, 122B, 122C, 122D in the upper portion 130 being included in, e.g. defining, the vent 122 through which the heated air is releasable to the cooking apparatus's 100 surroundings.

In some embodiments, such as shown in FIGs. 3 to 6, the cooking apparatus 100 comprises a lid for covering the auxiliary chamber. Such a lid may, for example, be moveable, e.g. detachable, to enable the user to access the inside of the auxiliary chamber.

In some embodiments, such as shown in FIGs. 3 to 6, a handle 134 may be provided to assist the user to move the lid to access the interior of the auxiliary chamber, and to (re-)close the auxiliary chamber.

In some embodiments, such as shown in FIGs. 3 and 4, the upper portion 130 of the auxiliary chamber that delimits the aperture(s) 122A, 122B, 122C, 122D takes the form of such a lid for covering the auxiliary chamber.

The portion, for instance the upper portion 130, e.g. lid, delimiting the aperture(s) 122A, 122B, 122C, 122D may define a final flow restriction and hence may determine the flow through the flow path(s) 116.

Experiments were undertaken to reduce the pressure drop for the flow (lower the resistance to flow). By controlling the area of the aperture(s) 122A, 122B, 122C, 122D relative to an overall area 135 of the portion, e.g. the upper portion 130, the flow can be adjusted to be sufficiently high to ensure continuous energy delivery. On the other hand, the flow can be configured so as to force the heated air to interact with the auxiliary food support 118 and/or item(s), e.g. food, supported by the auxiliary food support 118.

In some embodiments, and referring to FIG. 4, a total area of the one or more apertures 122A, 122B, 122C, 122D is at least 20% of the area 135 of the portion, e.g. the lid, that delimits the one or more apertures 122A, 122B, 122C, 122D.

Such a minimum percentage, e.g. a minimum so-called open area, of the area 135 can assist to ensure efficient flow of heated air along the flow path(s) 116 and to the surroundings, and thus continuous heat delivery to the auxiliary food support 118 and/or to item(s), e.g. food, supported by the auxiliary food support 118.

In comparison experiments, a completely closed lid, in other words with no fluid connection between the opening 112 and the surroundings of the cooking apparatus 100, was found to have limited function because of the concomitant flow restriction.

It is noted that the upper portion 130, e.g. lid, can have any suitable shape, for example a flat or conical shape. In a relatively simple non-limiting example, the lid has a conical shape with the lid delimiting a single opening defining the vent 122.

In such an example, the size, e.g. diameter, of the single opening may determine the flow.

It is noted that the upper portion 130, e.g. lid, may be regarded as an additional/optional feature, and in other embodiments, such as shown in FIGs. 1, 2 and 6, no such upper portion 130, e.g. lid, may be present. In this connection, an "open" auxiliary food support 118 may be acceptable.

In some embodiments, such as shown in FIGs. 2, 3 and 5, the auxiliary food support 118 is detachable from the cooking apparatus 100, e.g. from a remainder of the cooking apparatus 100 comprising the cooking chamber 102 and the heating device 106.

Such detachment of the auxiliary food support 118 may facilitate cleaning of the cooking apparatus 100, reconfiguring of the cooking apparatus 100 for preparing different types of food, and/or stowing of the cooking apparatus 100 in a storage area.

In some embodiments, such as shown in FIGs. 2, 3 and 5, the auxiliary food support 118 comprises an interface 136 for interfacing with the opening 112 or a portion of the flow path(s) 116 extending from the opening 112 when the auxiliary food support 118 is attached and thereby incorporated into the cooking apparatus 100.

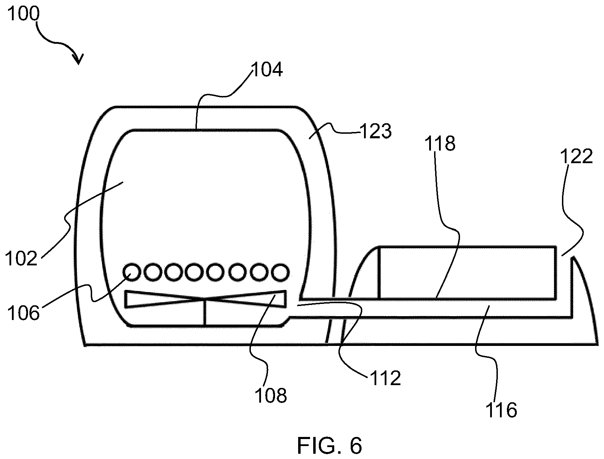

In other embodiments, such as shown in FIGs. 1 and 6, the auxiliary food support 118 is integrated into, e.g. is non-detachable from, the cooking apparatus 100. Such integration of the auxiliary food support 118 may render the cooking apparatus 100 more straightforward to manufacture.

It is nonetheless noted that the auxiliary food support 118 of the embodiment shown in FIG. 6 may alternatively be detachable from the cooking apparatus 100, e.g. from a remainder of the cooking apparatus 100 comprising the cooking chamber 102 and the heating device 106.

In some embodiments, the cooking apparatus 100, e.g. in the form of a kit of parts, comprises a plurality of auxiliary food supports 118 that are substitutable for each other. Thus, the respective auxiliary food support 118 that has substituted another auxiliary food support 118 of the plurality of auxiliary food supports 118 can be heated by the heated air in the at least one flow path 116.

One of the plurality of auxiliary food supports 118 can, for instance, be employed for heating food while another of the plurality of auxiliary food supports 118 can be used for serving food that has already been heated, or can be cleaned, etc.

When different auxiliary food supports 118 are included in the cooking apparatus 100, the different auxiliary food supports 118 can fulfil different food preparation purposes.

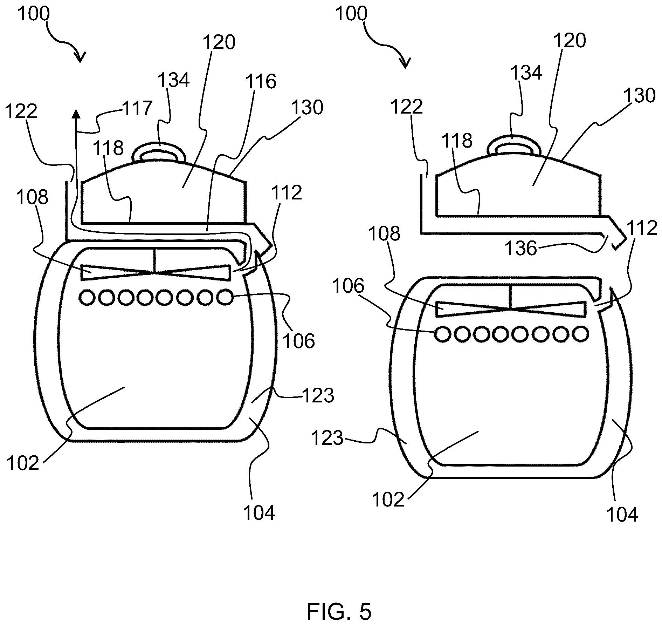

For example, one of the auxiliary food supports 118 may have a lower portion 126 that delimits one or more inlets 128 for admitting the heated air, e.g. for cooking salmon, (for instance, as shown in FIGs. 3 and 4) while another of the auxiliary food supports 118 may comprise a plate or auxiliary chamber without holes in a lower portion thereof, e.g. on or in which chocolate can be melted (for instance, as shown in any of FIG. 2 or 5).

In some embodiments, such as shown in FIGs. 1, 2, 3 and 5, the auxiliary food support 118 is arranged above the cooking chamber 102 when the cooking apparatus 100, e.g. air fryer, is orientated for use.

Such arrangement of the auxiliary food support 118 above the cooking chamber 102 may assist with positioning of the at least part of the auxiliary food support 118 above the bottom of the opening 112, as well as assisting to minimize a footprint of the cooking apparatus 100.

In other embodiments, such as shown in FIG. 6, the auxiliary food support 118 is arranged next to the cooking chamber 102 when the cooking apparatus 100 is orientated for use, albeit still with the at least part of the auxiliary food support 118 being above the bottom of the opening 112.

In such embodiments, the cooking chamber 102 and the auxiliary food support 118 may be accessed via adjacent drawers, with a first drawer of the adjacent drawers being moveable, e.g. slidable, to access the cooking chamber 102, and a second drawer of the adjacent drawers being moveable, e.g. slidable, to access the auxiliary food support 118.

In some embodiments, such as shown in FIGs. 1, 2, 3 and 5, the heating device 106 and/or the circulation system 108, e.g. fan, is or are arranged proximal to a top of the cooking chamber 102 when the cooking apparatus 100 is orientated for use. However, this should not be regarded as being limiting and in other embodiments, such as shown in FIG. 6, the heating device 106 and/or the circulation system 108 is or are arranged proximal to a bottom of the cooking chamber 102 when the cooking apparatus 100 is orientated for use.

In the non-limiting example shown in FIG. 6, an "upside down" arrangement of the heating device 106 and the circulation system 108, e.g. fan, is employed in combination with the auxiliary food support 118 being arranged next to the cooking chamber 102.

In other embodiments, the heating device 106 and/or the circulation system 108, e.g. fan, being arranged proximal to the top of the cooking chamber 102 (as shown in FIGs. 1, 2, 3 and 5) is combined with the auxiliary food support 118 being arranged next to the cooking chamber 102.

In summary, the present disclosure relates to a cooking apparatus 100, e.g. an air fryer, that reuses/makes use of residual heat in air expelled/vented to the surroundings. The cooking apparatus 100 comprises an additional food support 118, e.g. in the form of an additional compartment, as well as components, such as the cooking chamber 102 and the heating device 106, usually included in such a cooking apparatus 100.

On this additional food support 118, e.g. in the additional compartment, the residual heat may be transferred to the food thereon/therein either directly, e.g. in high temperature applications, or using a heat conduction element, in other words a heat exchanger, e.g. in sensitive or low temperature applications.

The additional food support 118, e.g. the additional compartment, can be either an integral part of the cooking apparatus 100 or an attachment which is detachable from the cooking apparatus 100.

The cooking apparatus 100 can be regarded as a cooking system that comprises a first cooking device 102, 104, 106, 112 whose outlet 112 permits hot air and/or steam to leave the first cooking device 102, 104, 106, 112. The cooking system also comprises a second cooking and/or warming device 118 having an interface 136 for communicating with the outlet 112 of the first cooking device 102, 104, 106, 112.

The first cooking device 102, 104, 106, 112 can be regarded as an active cooking device owing to the first cooking device 102, 104, 106, 112 including a heating device 106. The second cooking and/or warming device 118 can be regarded as a passive cooking device due to the second cooking and/or warming device 118 being heated by the hot air and/or steam from the first cooking device 102, 104, 106, 112. In this connection, the second cooking and/or warming device 118, e.g. the auxiliary food support 118, may not include a heating device in addition to that included in the first/active cooking device 102, 104, 106, 112.

In some embodiments, the second cooking and/or warming device 118 may comprise, e.g. may be formed with, an outer shell, an inner container for receiving item(s), e.g. food, and a flow path/channel 116 for the hot air and/or steam from the first cooking device 102, 104, 106, 112.

The flow path/channel 116 may, for example, be formed between the outer shell and the inner container.

Variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality.

The mere fact that certain measures are recited in mutually different dependent claims does not indicate that a combination of these measures cannot be used to advantage.

If the term "adapted to" is used in the claims or description, it is noted the term "adapted to" is intended to be equivalent to the term "configured to". If the term "arrangement" is used in the claims or description, it is noted the term "arrangement" is intended to be equivalent to the term "system", and vice versa.

Any reference signs in the claims should not be construed as limiting the scope.

## Claims

1. A cooking apparatus (100) comprising:
a cooking chamber (102) delimited by a cooking chamber wall (104);
a heating device (106) for heating the cooking chamber;
an opening (112) defined in the cooking chamber wall, through which opening heated air is releasable from the cooking chamber; and
an auxiliary food support (118), at least part of the auxiliary food support being above a bottom of the opening when the cooking apparatus is orientated for use, wherein at least one flow path (116) for the heated air is defined between the opening and the cooking apparatus's surroundings via said at least part of the auxiliary food support, the auxiliary food support and the at least one flow path being arranged to permit heat transfer from the heated air to the auxiliary food support and/or to item(s) supported by the auxiliary food support.

2. The cooking apparatus (100) according to claim 1, wherein the at least one flow path (116) is configured to provide decreased resistance to flow of the heated air away from the opening (112) than at the opening; and/or wherein the cooking apparatus comprises an air displacement device configured to displace air along the flow path(s).

3. The cooking apparatus (100) according to claim 1 or claim 2, wherein the at least one flow path's (116) cross-sectional area is greater away from the opening (112) than at the opening.

4. The cooking apparatus (100) according to any one of claims 1 to 3, wherein the at least one flow path (116) is arranged to pass through a food supporting region (120) of the auxiliary food support (118).

5. The cooking apparatus (100) according to any one of claims 1 to 3, comprising a heat conduction element arranged between the at least one flow path (116) and a food supporting region (120) of the auxiliary food support (118) such that heat is transferrable from the heated air to the food supporting region via the heat conduction element.

6. The cooking apparatus (100) according to claim 5, wherein the heat conduction element comprises a metallic wall arranged between the at least one flow path (116) and the food supporting region (120).

7. The cooking apparatus (100) according to claim 5 or claim 6, comprising a reservoir (124) for containing liquid, the reservoir being arranged to permit heat transfer from the heated air to the food supporting region (120) via liquid contained in the reservoir.

8. The cooking apparatus (100) according to any one of claims 1 to 7, comprising a vent (122) through which the heated air in the at least one flow path (116) is releasable to the cooking apparatus's surroundings, the vent being arranged above the at least part of the auxiliary food support (118) when the cooking apparatus is orientated for use.

9. The cooking apparatus (100) according to any one of claims 1 to 8, wherein the auxiliary food support (118) delimits an auxiliary chamber in which food is receivable.

10. The cooking apparatus (100) according to claim 9, wherein a lower portion (126) of the auxiliary chamber delimits one or more inlets (128) for admitting the heated air into the auxiliary chamber, and an upper portion (130) of the auxiliary chamber delimits one or more apertures (122A, 122B, 122C, 122D) for releasing the heated air in the at least one flow path (116) to the cooking apparatus's surroundings.

11. The cooking apparatus (100) according to any one of claims 1 to 10, comprising:
a cooling channel (123) in which air from the cooking apparatus's surroundings is received to provide cooling to part(s) of the cooking apparatus external to the cooking chamber (102); and
a control system configured to control delivery of air from the cooling channel into the flow path(s) (116).

12. The cooking apparatus (100) according to any one of claims 1 to 11, wherein the auxiliary food support (118) is detachable from the cooking apparatus.

13. The cooking apparatus (100) according to any one of claims 1 to 12, comprising a plurality of auxiliary food supports (118) that are substitutable for each other; optionally wherein the plurality of auxiliary food supports comprises auxiliary food supports that are different from each other.

14. The cooking apparatus (100) according to any one of claims 1 to 13, comprising a circulation system (108) arranged to direct air to the heating device (106) and to circulate the air heated by the heating device; optionally wherein the opening (112) is aligned with a flow outlet area (119) of the circulation system such that air displaced by the circulation system is directed through the opening.

15. The cooking apparatus (100) according to any one of claims 1 to 14, comprising a table-top cooking appliance; optionally wherein the table-top cooking appliance is in the form of an air fryer.
